(19) Europäisches Patentamt
European Patent Office
Office européen des brevets

(11) **EP 1 039 761 B1**

(12) **FASCICULE DE BREVET EUROPEEN**

(45) Date de publication et mention
de la délivrance du brevet:
**26.08.2015 Bulletin 2015/35**

(51) Int Cl.:
***H04N 21/434*** *(2011.01)*

(21) Numéro de dépôt: **00400728.2**

(22) Date de dépôt: **16.03.2000**

(54) **Procédé de diffusion de paquets de données numériques par un ensemble de canaux**

Verfahren für digitalen Datapacketenrundfunk über mehrere Kanäle

Method for broadcasting digital data packets through a set of channels

(84) Etats contractants désignés:
**BE DE DK ES FI GB GR IE IT NL PT SE**

(30) Priorité: **16.03.1999 FR 9903207**

(43) Date de publication de la demande:
**27.09.2000 Bulletin 2000/39**

(73) Titulaire: **SAGEMCOM BROADBAND SAS**
**92500 Rueil Malmaison (FR)**

(72) Inventeur: **Boru, Bruno**
**75013 Paris (FR)**

(74) Mandataire: **Barbe, Laurent**
**Gevers France**
**41, avenue de Friedland**
**75008 Paris (FR)**

(56) Documents cités:
**FR-A- 2 726 414    GB-A- 2 316 838**
**US-A- 5 864 557**

**Description**

Un réseau de diffusion d'informations numériques, telles que des programmes de télévision numérique ou des données informatiques, permet à un émetteur unique d'atteindre directement un grand nombre de récepteurs.

De ce fait, le réseau peut se développer sans nécessité d'investissements en équipements de commutation. Chaque récepteur reçoit la totalité du flux d'informations diffusées et sélectionne lui-même les informations désirées.

Comme il s'agit d'informations numériques, l'émetteur n'est pas limité à un type particulier d'informations et il peut donc offrir économiquement un grand nombre de services d'informations. Il est donc alimenté par plusieurs serveurs de flux d'informations numériques, telles qu'images et son de chaînes de télévision, prévisions météorologiques, cours de la bourse, informations d'actualité et autres.

Tous ces flux entrants sont regroupés et entrelacés temporellement en un flux unique, qui est diffusé par satellite ou par réseau câblé.

Afin que les récepteurs puissent reconnaître leurs flux élémentaires, l'émetteur diffuse les informations des divers flux entrants sous forme de paquets comportant chacun un Identificateur de Paquets (PID) du flux considéré.

Comme le flux total diffusé ne peut dépasser une valeur de seuil maximal, à chaque flux élémentaire entrant est allouée, de façon classique, pour son émission, une valeur maximale de débit à ne pas dépasser, pour éviter de perturber les autres flux. Si un flux élémentaire entrant dépasse temporairement cette valeur maximale, les informations correspondantes ne sont pas insérées dans le flux sortant et sont perdues. Il s'agit donc d'une gestion de débit dans laquelle on écrête simplement le débit de chaque flux à la valeur maximale fixe allouée pour l'émission. Une telle gestion présente donc l'inconvénient d'entraîner des pertes d'informations lorsque les flux entrants présentent des surcharges. Le document GB-A-2 316 838 divulgue une méthode de diffusion de paquets de données numériques par un ensemble de divers canaux ayant un débit global.

La présente invention vise à procurer une plus grande souplesse d'exploitation.

A cet effet, l'invention concerne un procédé de diffusion de paquets de données numériques défini dans la revendication 1.

Ainsi, chaque canal n'est pas limité à un débit fixe mais au contraire peut écouler, en fonction de ses besoins, un débit accru lorsque le trafic d'autres canaux est faible.

Avantageusement, on aiguille d'abord vers au moins un des canaux un volume minimal de paquets et on ne poursuit l'aiguillage de paquets vers le canal ayant reçu le volume minimal de paquets qu'après avoir aiguillé vers chacun des autres canaux un volume de paquets atteignant le volume minimal.

On garantit ainsi le bon fonctionnement de ceux des récepteurs qui doivent recevoir au moins un débit ou volume minimal de données, sans toutefois créer une inégalité excessive entre canaux puisque le canal à débit minimal, d'abord prioritaire, devient ensuite non prioritaire une fois qu'il a reçu le volume minimal de paquets.

Avantageusement encore, on aiguille les paquets d'abord vers des canaux prioritaires et/ou on attribue aux paquets à aiguiller un niveau d'urgence et on aiguille d'abord les paquets présentant le plus haut niveau d'urgence et, en cas d'égalité de niveau de priorité de canaux, on aiguille d'abord les paquets présentant le plus haut niveau d'urgence.

Des canaux peuvent ainsi être prioritaires sur d'autres, quelles que soient les informations contenues dans les paquets qu'ils diffusent, et, par ailleurs, les informations à diffuser ont aussi une priorité de par leur urgence, quel que soit le canal dans lequel elles vont être diffusées.

Dans un mode de mise en oeuvre préféré du procédé de l'invention, on répartit les canaux en groupes de canaux, on fixe pour chaque groupe une valeur de seuil haut de débit en fonction du seuil haut du débit global de l'émetteur et de la valeur de seuil haut des autres groupes et l'aiguillage des paquets dans chaque groupe s'effectue en considérant, à chaque fois, que l'émetteur a un seuil haut de débit global réduit à la valeur de celui du groupe considéré.

On évite ainsi toute interférence entre canaux de groupes différents, liée à des pointes de trafic sur un canal.

L'invention sera mieux comprise à l'aide de la description suivante d'un mode préféré de mise en oeuvre du procédé de l'invention, en référence au dessin annexé, sur lequel :

- la figure 1 est un schéma par blocs d'un émetteur de paquets de données pour la mise en oeuvre du procédé de l'invention,
- la figure 2 illustre plus en détail la structure de l'émetteur,
- la figure 3, formée des figures 3A, 3B et 3C, est un diagramme temporel illustrant la mise en paquets de diffusion de datagrammes, et
- la figure 4 est un diagramme illustrant l'ordre de transferts de datagrammes vers des canaux d'émission.

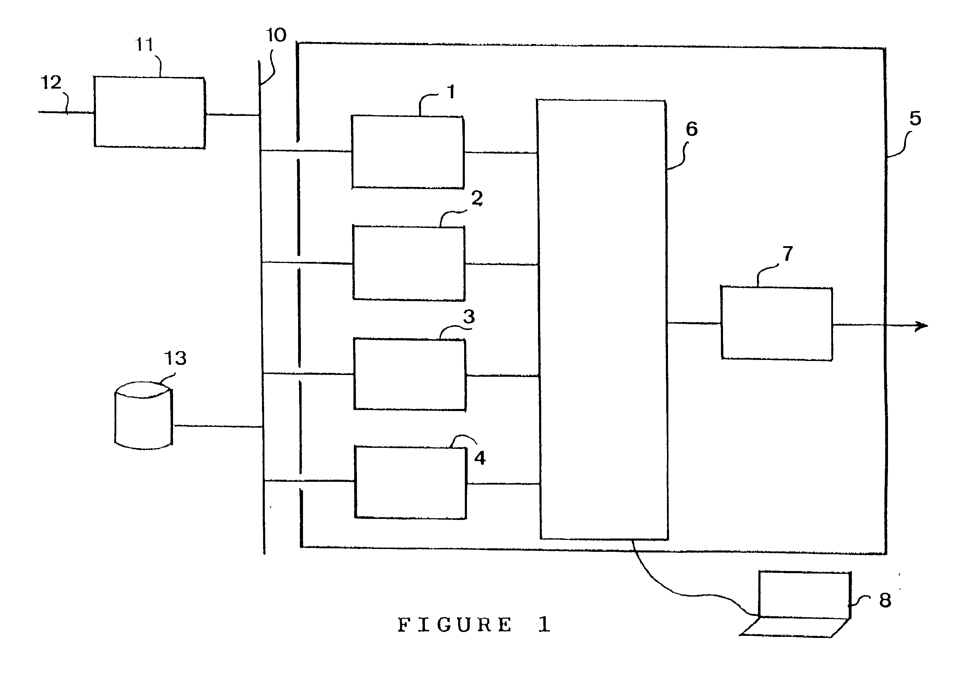

L'émetteur 5 représenté sur la figure 1 émet, par une pluralité de canaux d'émission temporellement multiplexés, des paquets de données à destination d'une pluralité de récepteurs, qui sélectionnent un ou plusieurs des canaux. Cette émission s'effectue par diffusion depuis une antenne d'un réseau de diffusion par satellite ou par une tête de station d'un réseau câblé.

L'émetteur 5 reçoit dans cet exemple M = 4 flux élémentaires de données dans M canaux de réception, ici sous forme de paquets de données, ou datagrammes, de longueurs diverses, et utilise ces datagrammes pour alimenter N = 4 canaux d'émission dans lesquels sont diffusés des paquets, au format voulu, représentant les datagrammes.

Les flux entrants sont reçus et mémorisés temporairement par M cartes respectives 1, 2, 3 et 4, ou canaux de réception, d'interface de liaison ETHERNET reliées à un réseau ETHERNET 10 alimenté par un routeur 11 de l'INTERNET 12 et par une base de données locale 13. D'une façon générale, l'émetteur 5 peut être alimenté en données à diffuser par tout réseau de transmission de données, à mode de transmission paquets ou circuit. Les cartes 1-4 sont reliées en sortie à un ensemble de calcul 6 commandant un circuit émetteur 7 émettant vers un réseau de diffusion. Un PC 8 permet de commander l'ensemble de calcul 6, pour le configurer, par exemple. L'émetteur 5 fait ainsi office de passerelle entre divers serveurs de données et le réseau de diffusion.

Chaque canal d'émission est identifié par un identificateur appelé PID (Identificateur de Paquets) inséré dans chaque paquet diffusé. Un même canal d'émission peut recevoir des datagrammes de plusieurs cartes d'entrée 1-4. Ainsi, par exemple, un datagramme d'informations météorologiques pourra être diffusé dans un canal spécifique à la météorologie et aussi diffusé dans un canal d'informations générales. Ainsi, un émetteur tel que 5 comporte au moins une entrée ($M \geq 1$) et plusieurs canaux de sortie ($N \geq 2$) alimentés en données par cette entrée (fonction démultiplexeur logique). Dans le cas général tel que représenté ici, il y a M > 1, l'émetteur 5 a donc aussi, dans cet exemple, une fonction de multiplexeur, ou concentrateur, logique. De ce fait, il a globalement ici une fonction de commutation ou brassage logique de M flux de canaux de réception vers N canaux d'émission. L'émetteur 5 a, en sortie, une fonction de multiplexeur ou concentrateur physique, pour fournir un flux unique de paquets successifs des divers canaux d'émission, multiplexés ou entrelacés temporellement pour être diffusés les uns après les autres.

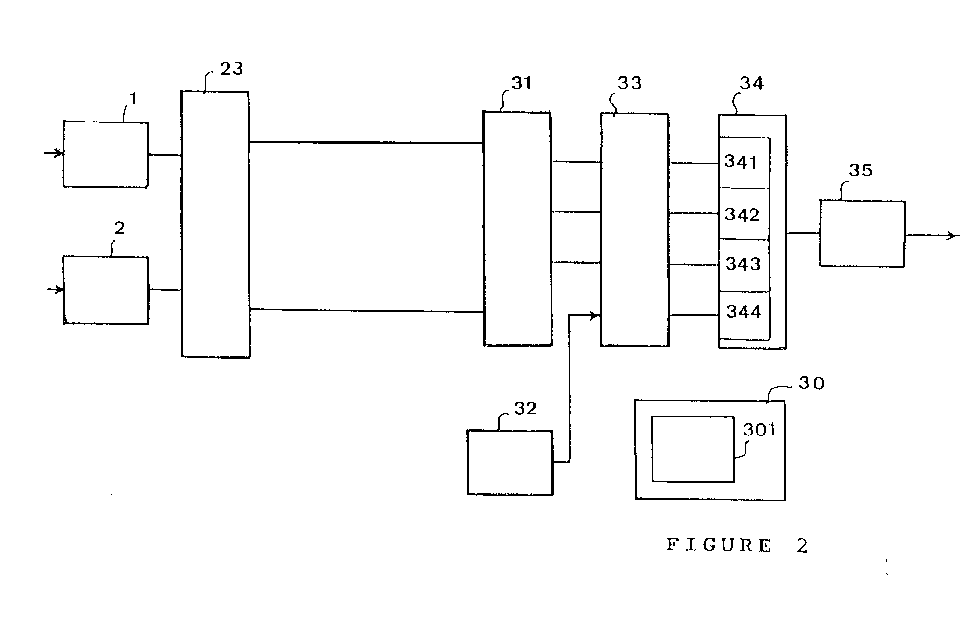

La figure 2 représente plus en détail l'ensemble de calcul 6 et illustre le cheminement ci-dessus des données dans l'émetteur 5. Pour simplifier l'exposé, on a ici réduit à M = 2 le nombre d'entrées de flux d'informations.

Une unité centrale 30, avec des tables 301 de configuration, ou paramétrage, des divers canaux d'émission, commande les circuits représentés. Les cartes 1, 2 alimentent, en données reçues depuis le réseau ETHERNET 10, telles que datagrammes, une mémoire tampon 23 qui les transfère ensuite à des circuits 31 de transfert et de brassage qui regroupent certains des flux en fonction du canal d'émission auxquels ils sont destinés. Les flux issus des circuits 31 et classés par canal d'émission (PID) sont transmis à des circuits 33 de mise de ces flux à un format déterminé de paquets de transport TP, prévu pour la diffusion. Les circuits 33 reçoivent aussi des données d'information relatives à des tables MPEG2, provenant d'un circuit 32, qui décrivent le type des informations de chaque canal d'émission et permettent ainsi aux récepteurs du réseau de diffusion de sélectionner un ou plusieurs canaux, en désignant, à travers elles, le ou les numéros PID qui conviennent. Les circuits 33 fournissent les paquets des N = 4 canaux d'émission sous forme de données encapsulées dans les paquets de transport TP, de longueur fixée à 188 octets, à un circuit aval 34 qui entrelace temporellement, par multiplexage, les paquets TP des N canaux d'émission, pour les transmettre en série à un circuit d'émission 35, à partir de N files d'attente d'émission 341, 342, 343 et 344.

Le fonctionnement des circuits ci-dessus va maintenant être expliqué plus en détails.

Dans le circuit 33 de mise en paquets TP, les flux de datagrammes sont mélangés aux tables MPEG2, avant mise en paquets selon un mode particulier propre à chaque canal d'émission. Chaque canal d'émission, de PID déterminé, est ainsi constitué d'un flux de paquets de transport TP transportant les données des datagrammes et les tables MPEG2. Les paquets des N canaux d'émission sont ensuite fondus, par multiplexage temporel, en un flux unique en sortie du circuit 34. Le débit global, en sortie du circuit 34, ne peut dépasser une valeur de seuil haut de l'émetteur 5.

Afin de respecter cette contrainte et d'offrir une souplesse d'exploitation pour assurer le débit voulu pour les divers canaux d'émission, la diffusion des paquets de données s'effectue selon une suite de cycles, dans chacun desquels on aiguille les paquets de données vers des canaux d'émission déterminés et, tant qu'il y a des paquets, jusqu'à ce que le volume des paquets aiguillés corresponde au seuil haut de l'émetteur 5.

Cette gestion de la bande passante offerte aux canaux d'émission va être détaillée dans les exemples suivants. Tout d'abord, on lit les trames ETHERNET de datagrammes reçues dans la mémoire 23 depuis le cycle précédent.

Ensuite, chaque nouveau datagramme reçoit un niveau d'urgence Q, qui équivaut à un niveau de priorité attaché à chaque datagramme selon des critères déterminés, par exemple la carte 1-4 d'entrée ou encore l'heure courante. A tout datagramme est associé (au moins) un numéro PID de canal d'émission, en sortie de diffusion.

Dans cet exemple, l'ensemble de N canaux d'émission est subdivisé en G groupes, de tailles quelconques, par exemple ici G = 2 groupes de deux canaux d'émission. Dans ce qui suit, i désigne le rang (1 à G = 2) d'un groupe et j désigne le rang d'un canal d'émission dans ce groupe, ici j = 1 ou 2. Chaque groupe dispose en émission d'une bande passante ou débit représentant un seuil haut qui lui a été alloué, dans la limite du seuil haut de bande passante, ou débit maximal, de l'émetteur 5. Ces seuils hauts de bande passante de groupe, pouvant être mutuellement différents, peuvent être fixes ou variables, c'est-à-dire que le protocole de partage de bande passante, entre les i canaux d'émission d'un groupe peut, à un niveau supérieur, s'appliquer au partage de bande passante entre les G groupes de l'émetteur 5.

Ce qui suit concerne un traitement relatif à chaque groupe i. Ceci reste valable dans le cas où il n'y aurait qu'un seul groupe, de N canaux d'émission, disposant donc de la totalité de la bande passante de seuil haut de l'émetteur 5.

Ensuite, on regroupe logiquement les j canaux de chaque groupe i puis on lit une des tables 301 d'exploitation des canaux d'émission, pour identifier ceux pour lesquels il faut assurer au moins un débit de seuil minimal, représentant un nombre ou volume minimal de paquets, c'est-à-dire les canaux d'émission qui doivent disposer au moins d'une bande passante garantie correspondant au débit de seuil minimal.

Ensuite, on recherche les datagrammes en mémoire 23 ayant un numéro PID correspondant à un canal d'émission requérant ainsi de disposer au moins du volume minimal de bande passante et on lit ces datagrammes par ordre de niveaux d'urgence Q décroissants en vue de les aiguiller vers la file d'attente d'émission 341 à 344 du canal voulu.

Ensuite, dans les circuits 33, ces datagrammes sont mis sous forme de paquets TP adressés chacun à la file d'attente d'émission 341-344 voulue.

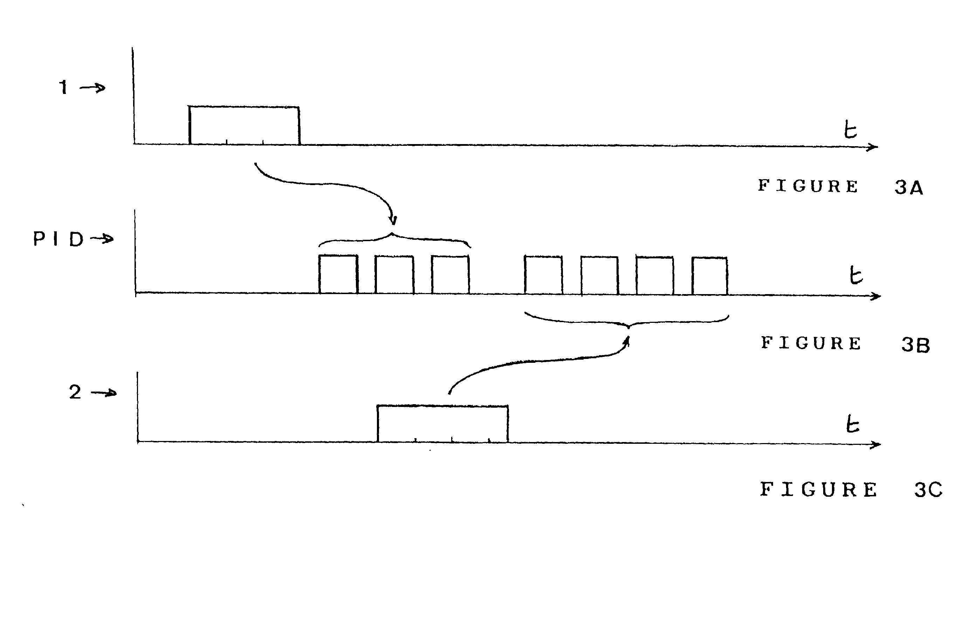

Les figures 3A à 3C illustrent le fait que des datagrammes reçus par les cartes 1 et 2 (fig. 3A et 3C) sont, l'un après l'autre, transférés à une file d'attente en émission 341-344 déterminée par son numéro PID, avec à chaque fois mise du datagramme sous forme de paquet(s) TP.

Chaque datagramme peut nécessiter plusieurs paquets TP, et on calcule à chaque fois le cumul du nombre de paquets TP dans la file d'attente d'émission 341-344. Chaque cumul du nombre de paquets TP ci-dessus, et donc d'octets, rapporté à la durée de la période d'un cycle, pendant laquelle on va vider par émission les files d'attente d'émission 341 à 344, permet de déterminer un débit effectif prévisionnel, ou bande passante, pour la période du cycle courant. On poursuit la mise en paquets des datagrammes tant que la bande passante prévisionnelle n'atteint pas le seuil minimal pour chaque canal d'émission considéré et tant qu'il reste des datagrammes disponibles.

Il reste alors à attribuer aux divers canaux d'émission le reliquat de la bande passante maximale de l'émetteur 5 dans la limite du seuil haut du groupe considéré, c'est-à-dire la valeur du seuil haut de l'émetteur 5 diminuée des diverses valeurs de bande passante minimale garantie, ou volume de paquets, requises par certains des canaux d'émission et effectivement consommée. Si un canal n'utilise pas toute sa bande passante minimale garantie, faute de datagrammes, sa bande passante restante est disponible pour le reliquat ci-dessus.

Trois protocoles de distribution de ce reliquat sont envisageables.

Selon le premier protocole, on aiguille et transfère les paquets d'abord vers les canaux d'émission (remplissage de leur file d'attente 341-344) les plus prioritaires et, si des canaux ont un même niveau de priorité, on détermine s'il faut remplir leur file d'attente 341-344, en fonction de leur bande passante actuelle, en répartissant entre eux, de façon égale ou non, la bande passante totale de l'émetteur 5 ou simplement le reliquat non encore réparti dans la limite du seuil maximal du groupe. La mise en paquets des datagrammes pour chaque canal d'émission s'effectue de préférence par ordre de niveaux d'urgence décroissants.

Ainsi, les canaux prioritaires sont servis en premier et, même en cas de saturation prévisible, les datagrammes de niveaux d'urgence supérieurs sont prioritaires et sont donc diffusés.

Selon le deuxième protocole, on traite encore les canaux par priorités décroissantes et, en cas d'égalité niveau de priorité entre plusieurs canaux, on aiguille et transfère, aux files d'attente 341-344, d'abord des paquets TP formés à partir du ou des datagrammes présentant le plus haut niveau d'urgence.

A chaque niveau, de priorité et d'urgence, on choisit de traiter les datagrammes à mettre en paquets TP en fonction de la bande passante courante affectée au canal d'émission considéré et on répartit, de façon égale ou non entre les canaux, le reliquat de bande passante en fonction de la bande passante totale (seuil haut du groupe) ou simplement de la taille de ce reliquat.

Selon le troisième protocole, on transfère d'abord les datagrammes de plus haut niveau d'urgence et, pour un niveau d'urgence déterminé, on remplit les canaux d'émission par niveaux de priorité décroissants. Pour un niveau d'urgence et un niveau de priorité déterminés, on choisit d'abord les datagrammes à mettre en paquets TP en fonction de la bande passante courante de canal d'émission considéré, en répartissant entre les canaux, de façon égale ou non, le reliquat de bande passante en fonction de la bande passante totale (seuil haut du groupe) ou de la taille de ce reliquat.

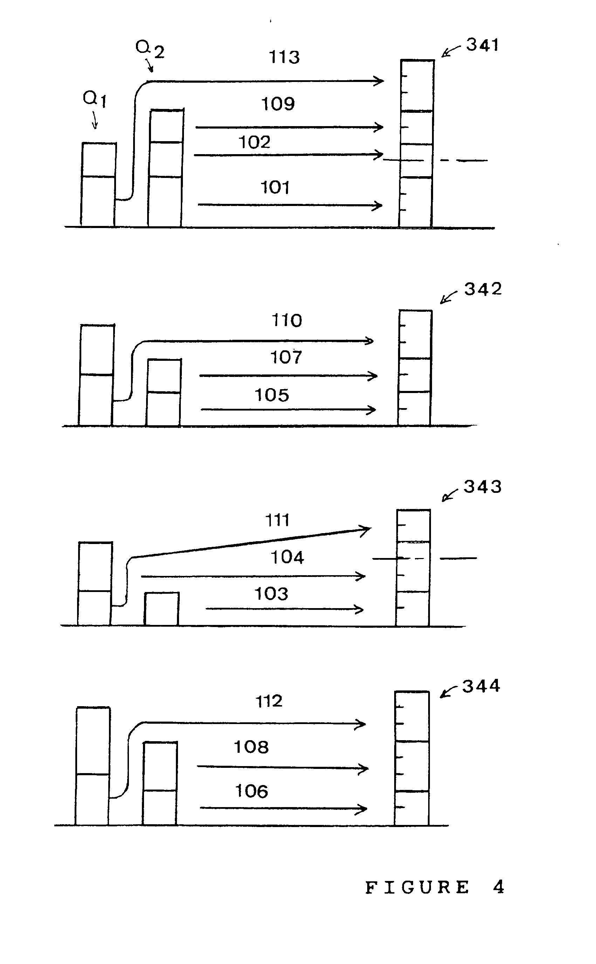

La figure 4, formée des figures 4A, 4B, 4C et 4D, représente M = 4 files d'attente d'entrée ou de réception en mémoire 23, chacune sous forme de deux piles de datagrammes de diverses tailles (en ordonnée) à gauche sur la figure 4, et, à droite, les N = 4 files d'attente d'émission 341-344. Dans un but de clarté de l'exposé, le brassage entre les files d'attente de réception et celles d'émission 341-344 est supposé déjà effectué. Les circuits 33 n'ont de même pas été représentés.

Dans les files d'attente de réception en mémoire 23, les datagrammes sont regroupés, c'est-à-dire peuvent être sélectionnés au moins logiquement, selon leur niveau d'urgence, Q1 et Q2 ici. Il y a ici deux niveaux d'urgence, le plus faible Q1 correspondant à la pile de paquets la plus à gauche.

Les deux canaux d'émission ayant les files d'attente d'émission 341 et 343 requièrent ici d'obtenir par priorité un minimum de bande passante, pour assurer un débit correspondant, représenté par les deux traits horizontaux interrompus, correspondant ici à l'émission de quatre paquets TP pendant la durée du cycle courant. Un cycle comprend une période de chargement des files d'attente d'émission 341-344, qui occupe une durée variable dans le cycle. Le vidage des files d'attente d'émission 341-344 peut s'effectuer ici sur toute la durée du cycle.

Les références 101 à 113 des flèches représentent l'ordre dans lequel sont successivement transférés les paquets, des files d'attente de réception à celles d'émission 341-344. Pour chaque file d'attente de réception, les datagrammes sont d'abord extraits de la pile Q2 à niveau d'urgence le plus élevé puis de l'autre Q1, à gauche, une fois la première vidée. On aiguille d'abord le volume minimal de paquets vers les files d'attente d'émission 341 et 343. Le premier canal (341) reçoit d'abord (101) un datagramme et, son seuil minimal de bande passante requise n'étant pas atteint, il reçoit (102) un deuxième datagramme. Le seuil minimal étant alors franchi, c'est alors le troisième canal (343) qui reçoit de même (103, 104) deux datagrammes et le seuil minimal est alors franchi.

On ne poursuit l'aiguillage de paquets vers les canaux 341 et 343 ayant reçu le volume minimal de paquets qu'après avoir aiguillé vers chacun des autres canaux 342 et 344 un volume de paquets atteignant le volume minimal. Ce sont donc les autres canaux 342 et 344 qui reçoivent des datagrammes suivants, un par un, d'abord (105) le canal 342 puis (106) le canal 344, ensuite (107) à nouveau le canal 342 et (108) le canal 344. A ce moment, les files d'attente d'émission 342 et 344 des canaux n'ayant pas requis par priorité un remplissage à un seuil minimal atteignent un volume de respectivement quatre et cinq paquets TP, donc au moins égal au seuil minimal. Les files d'attente d'émission 341 et 343 peuvent alors à nouveau recevoir des datagrammes. Ainsi, chacune des files d'attente d'émission 341-344 reçoit un paquet lors des transferts respectifs 109, 110, 111 et 112. Le transfert 113 vers la file d'attente d'émission 341 correspond au début d'un nouveau balayage des canaux d'émission pour d'autres tels transferts. Les transferts vers tout canal d'émission (341-344) s'arrêtent si un seuil haut de débit ou bande passante de celui-ci est atteint, ou s'il n'y a plus de datagrammes qui lui sont destinés. Dans cet exemple, une fois arrêtés les transferts vers un canal d'émission lors d'un cycle, on ne les reprend pas même si sa file d'attente d'émission 341-344 se vide en dessous du seuil haut du canal considéré ou s'il arrive de nouveaux datagrammes à transférer vers le canal considéré. De ce fait, dans chaque cycle, on n'aiguille vers les canaux d'émission qu'une série ininterrompue de paquets.

L'algorithme général est expliqué plus en détails ci-dessous dans le cas du premier protocole et illustré par la liste ci-après des étapes de gestion des flux d'entrée.

Après une étape 51 de lecture des trames ETHERNET, une étape 52 comporte un rangement final des datagrammes dans des files d'attente d'entrée, chacun associé à un canal d'émission, et donc à un identificateur PID déterminé, donc respectivement à l'une des files d'attente de sortie 341 à 344. Les canaux d'émission ou numéros PID ayant une file d'entrée non vide sont inscrits dans une liste X. A une étape 53 suivante, on calcule, selon le principe indiqué plus haut, le nombre Ai de paquets TP de taille L (188 octets ici) qui correspond au débit Di (seuil maximal du groupe) alloué spécifiquement à chaque groupe i de canaux d'émission, compte tenu de la période T de répétition des cycles de l'algorithme, ceci selon la formule :

$$Ai \times L = Di \times T$$

**GESTION DES FLUX D'ENTREE**

| | |
|---|---|
| 51 | Lecture trames reçues |
| 52 | Rangement trames |
| 53 | Calcul du nombre Ai paquets pour le seuil haut du groupe |
| 54 | Calcul de Nb paquets pour le volume minimal de paquets |
| 55 | Initialisation compteur Cij d'estimation du nombre de paquets |
| 56 | Etablissement liste Yi de canaux à volume minimal de paquets |
| 57 | Lecture datagramme |
| 58 | Détermination du nombre de nouveaux paquets |
| 59 | Passage à urgence inférieure |
| 60 | Canal suivant de Yi |
| 61 | Nombre de paquets à répartir |
| 62 | Inscription PID dans liste circulaire Zi |
| 63 | Mise à jour compteur Kij |
| 64 | Lecture liste Zi |
| 65 | Si Kij = max $\Rightarrow$ sortie canal de la liste Zi |
| 66 | Kij > Nb de paquet de volume minimal ? |
| 67 | Rééligibilité du canal pour supplément de bande passante |
| 68 | Mise en paquets de datagrammes |
| 69 | File d'entrée canal vide ? |
| 70 | Sortie canal de la liste Zi |
| 71 | Mise en paquets TP d'un datagramme pour urgence max |
| 72 | Calcul nombre de nouveaux paquets TP du datagramme |
| 73 | Fin du traitement du canal |
| 74 | Paquet supplémentaire |
| 75 | Eligibilité si bande passante min requise : si autres canaux servis |
| 76 | Incrémentation compteur Kij |
| 77 | Kij > Nb paquets transférés ? |

A une étape 54 suivante, on calcule, selon le même principe, le nombre de paquets TP correspondant à la bande passante minimale garantie, ou volume minimal de paquets, de chaque canal j, si tel est le cas (zéro par défaut) et le nombre relatif à une bande passante maximale du canal j considéré du groupe i considéré, si tel est le cas (par défaut : la bande passante allouée au groupe i).

A une étape suivante 55, on initialise, pour chaque canal, un compteur Cij d'estimation du nombre de paquets TP qui seront stockés dans la file d'attente de sortie 131-134 du canal considéré. La valeur initiale, avant tout rechargement de la file de sortie 341-344, est égale au nombre de paquets TP qui y subsistent (chargés au cycle précédent mais non encore émis), nombre qui est lu pour initialiser le compteur Cij ci-dessus. A une étape 56 suivante, on établit pour chaque groupe une liste Yi de canaux d'émission qui ont en entrée des datagrammes à traiter (à transférer en file de sortie 341-344), qui requièrent une bande passante minimale garantie non nulle et dont le remplissage de la file de sortie 341-344 est encore insuffisant pour fournir au moins le débit minimal correspondant à la bande passante minimale requise.

A une étape 57 suivante, on lit un nouveau datagramme, de niveau d'urgence courant, le plus élevé au début, dans la file d'entrée voulue pour le mettre sous forme de paquet(s) TP et ainsi remplir la file de sortie correspondante 341-344. A une étape 58, on détermine le nombre de nouveaux paquets TP ajoutés à la file de sortie 341-344 considérée et on fait progresser de manière correspondante le compteur Cij. Les étapes 57 et 58 s'arrêtent lorsque le seuil de bande passante minimale requise est atteint, ou faute de datagrammes en file d'attente de réception. A une étape 59 suivante, on reboucle aux étapes 57 et 58, pour le niveau d'urgence Q de niveau inférieur au niveau d'urgence Q courant puis, ayant parcouru tous les niveaux de qualité, on passe, à une étape 60, au canal d'émission suivant de la liste Yi.

Les étapes 61 à 77 concernent la répartition, entre les groupes et les canaux, du reliquat de la bande passante non encore attribuée. Cette répartion est égalitaire dans cet exemple.

A l'étape 61, on détermine, pour chaque groupe i, le nombre de paquets TP à répartir entre les j canaux de ce groupe i. Il s'agit du nombre maximal de paquets pouvant être émis par le groupe, compte tenu de la bande passante maximale qui lui a été allouée, nombre auquel on a retranché le nombre de paquets TP déjà transmis aux files d'attente d'émission 341-344 requérant une bande passante minimale garantie (étapes 56-58), et retranché aussi le nombre de paquets TP déjà présents en file d'attente d'émission 341-344 qui ne requièrent pas de bande passante minimale garantie. A l'étape 62, on inscrit, pour chaque groupe i, le numéro d'identification PID de chaque canal ij du groupe i dans une liste à lecture circulaire Zi.

A l'étape 63, on met à jour un compteur Kij de paquets TP "équitablement répartis" vers le canal au numéro PID considéré. Le compteur Kij contient le nombre de paquets TP que le canal ij considéré a actuellement le droit d'émettre. Le compteur Kij a pour but d'égaliser autant que possible les débits de tous les canaux ij dans chaque groupe i, ceci en s'assurant que les canaux n'ayant pas requis de bande passante minimale garantie vont, après les autres, recevoir eux aussi, et dans la mesure où un reliquat existe, une allocation de bande passante sensiblement égale à celle requise et allouée d'abord à ceux-ci. En bref, les canaux ij initialement élus, ayant reçu prioritairement une allocation de bande passante minimale garantie perdent tout droit à une allocation supplémentaire, c'est-à-dire ne sont plus éligibles tant que les autres canaux n'ont pas reçu une bande passante équivalente. On tend ainsi à rétablir une distribution égalitaire.

A l'étape 64, on poursuit la lecture de la liste circulaire Zi de chaque groupe tant qu'il reste des paquets à répartir entre les canaux et des datagrammes à encapsuler. A l'étape 65, si le compteur Kij de répartition relatif au numéro PID du canal ij atteint le débit maximal autorisé du canal ij, on enlève le numéro PID considéré de la liste Zi. Sinon, à l'étape 66, on détermine si le compteur Kij dépasse le nombre de paquets TP correspondant à la bande passante minimale garantie du canal ij considéré. Si, à l'étape 67 suivant l'étape 66, on détermine que le canal ij considéré n'a pas encore atteint son débit ou bande passante maximal autorisé et si l'examen des divers compteurs Kij montre que les autres canaux du groupe i ont reçu un nombre de paquets TP au moins égal à celui correspondant à la bande passante minimale garantie du canal ij considéré, ce dernier redevient alors éligible pour l'attribution équitable du reliquat de bande passante. En pareil cas, on incrémente le compteur Kij du nombre de paquets TP attribués.

Si le compteur Kij dépasse le nombre de paquets TP actuellement mis en paquets pour le canal ij considéré, cela indique que la file d'attente d'émission n'atteint pas le niveau de remplissage autorisé et on met en paquets TP des datagrammes à l'étape 68 jusqu'à avoir engendré au moins un paquet TP de plus. Si l'examen de la file d'entrée du canal ij considéré à l'étape 69, montre qu'elle est vide, on enlève le numéro PID correspondant de la liste Zi à l'étape 70. Sinon, à l'étape 71, on traite le datagramme de plus haut niveau d'urgence, relatif au numéro PID considéré, en le mettant sous forme de paquets TP dans la file d'attente d'émission 341-344 considérée.

A l'étape 72, on calcule le nombre de paquets TP ainsi engendrés et incrémente le compteur Cij d'estimation du nombre de paquets engendrés à destination de la file de sortie 341-344 considérée. On aboutit, étape 73, à la fin du traitement d'alimentation en paquets du canal ij considéré, s'il n'a plus de datagramme en file d'attente de réception ou s'il a atteint son débit maximal autorisé. Sinon, à l'étape 74, on recommence comme ci-dessus jusqu'à engendrer au moins un paquet TP de plus (cf. étape 68). Le total de paquets indiquant la taille du reliquat est décrémenté d'autant. Si, contrairement au cas de l'étape 68, le compteur Kij ne dépasse pas le nombre de paquets TP actuellement transférés vers le canal ij, celui-ci dispose encore de paquets engendrés par la mise en paquets d'un datagramme précédent.

A l'étape 75, pendant de l'étape 67, on détermine si le canal ij courant a requis une bande passante minimale garantie et, en pareil cas, on détermine si tous les autres canaux ij du groupe i considéré se sont vu attribuer par la suite un nombre de paquets TP correspondant au moins à la bande passante minimale garantie du canal ij, allouée au début. En d'autres termes, on détermine si au moins l'un des autres canaux ij du groupe i ne s'est vu attribuer qu'un nombre de paquets TP inférieur à celui attribué au canal ij considéré, qui a requis une bande passante minimale garantie. Dans ce cas, ce dernier canal ij n'est alors, au moins temporairement, pas éligible pour l'attribution du reliquat de bande passante. A l'étape 76, on incrémente le compte Kij et, à l'étape 77, on détermine si le compteur Kij dépasse le nombre de paquets TP actuellement transférés vers le canal ij considéré. En pareil cas, le canal PID a une bande passante minimale garantie qui n'est pas remplie entièrement et qui ne peut l'être plus, par absence de datagramme en file d'attente en entrée. Le numéro PID est alors enlevé de la liste Zi et le traitement du canal ij considéré s'achève. Sinon, le groupe i a réparti un paquet TP de plus, mais il y a toujours autant de paquets TP disponibles pour la répartition équitable.

Ceci achève la routine de répartion du reliquat de bande passante et donc de traitement des datagrammes reçus. Les datagrammes éventuellement non traités à un cycle peuvent être pris en compte au cycle suivant.

Emission des paquets

Le vidage des files d'attente de sortie 341-344 par émission à travers le circuit 35 va maintenant être expliqué, pour chaque groupe de canaux d'émission. Les principes généraux de vidage des files de sortie 341-344 reprennent ceux relatifs aux files d'attente de réception, pour régler dynamiquement les divers débits.

A une étape 81, on détermine un nombre de paquets TP correspondant à la bande passante allouée au groupe et on y retranche le nombre de paquets correspondant au minimum de bande passante requis par divers canaux du groupe. Le volume d'informations correspondant à ces paquets doit être émis de façon prioritaire, le reliquat de bande-passante du groupe pouvant ensuite être réparti entre tout ou partie des paquets, comme expliqué pour les files d'attente de réception. A cet effet, à une étape 82, on insère le numéro PID dans une liste circulaire Zi du groupe et pour chaque numéro PID, à une étape 83, on examine si le canal correspondant n'a plus de paquet à émettre ou s'il a atteint son débit maximal autorisé (nombre de paquets par cycle). En pareil cas, on enlève le numéro PID considéré de la liste Zi, à une étape 84. Si le canal considéré a encore des paquets TP à émettre dans le cadre d'une bande passante minimale garantie, on émet, à une étape 85, le premier paquet disponible (a priori le plus ancien) dans la file de sortie 341-344 considérée. On décrémente alors un compte du nombre de paquets TP restant à émettre dans le cadre du volume minimal garanti. S'il reste encore de la bande passante disponible au niveau du groupe, on émet d'autres paquets TP en servant les canaux dans l'ordre par exemple des niveaux de priorité décroissants, à une étape 86, en décrémentant de façon correspondante un compte de bande passante, ou nombre de paquets, disponible au niveau du groupe.

Revendications

1. Procédé de diffusion de paquets de données numériques par un ensemble de divers canaux (341-344), avec leurs files d'attente, d'un émetteur de diffusion, l'entrée de l'émetteur recevant (1-4) au moins un flux d'informations entrant sous forme de datagrammes ou de paquets de données, procédé **caractérisé par le fait que** la diffusion s'effectue selon une suite de cycles périodiques, dans chacun desquels on aiguille les paquets de données vers les files d'attente de canaux déterminés (341-344) tant qu'il y a des paquets jusqu'à ce que le nombre ou volume des paquets aiguillés corresponde à un seuil haut du nombre ou volume de paquets diffusés par cycle de l'émetteur, et **caractérisé par** ;

  - on répartit les canaux (341-344) en groupes de canaux,
  - on fixe pour chaque groupe une valeur de seuil haut du nombre ou volume de paquets diffusés par cycle vers ledit groupe en fonction du seuil haut du nombre ou volume de paquets diffusés par cycle de l'émetteur (5) et de chaque valeur de seuil haut du nombre ou volume de paquets diffusés par cycle vers les autres groupes, et
  - on effectue l'aiguillage des paquets vers les files d'attente des canaux de chacun des groupes en considérant, à chaque fois, que l'émetteur (5) a un seuil haut du nombre ou volume de paquets diffusés par cycle réduit à la valeur de celui du groupe considéré,

  et dans lequel l'aiguillage est réalisé par le fait que :

  - on identifie les canaux de chaque groupe pour lesquels il faut assurer au moins un nombre ou volume minimal de paquets (TP) diffusés par cycle, c'est-à-dire une bande passante garantie, et on transfère d'abord des paquets aux files d'attentes de ces canaux, en calculant à chaque transfert le cumul pour chaque file d'attente de ces canaux du nombre ou volume de paquets dans ladite file d'attente depuis le début du cycle courant, on détermine une bande passante prévisionnelle pour chacun de ces canaux pour la période du cycle courant à partir dudit cumul et de la durée de la période d'un cycle, et on poursuit le transfert de paquets vers chacun de ces canaux tant que la bande passante prévisionnelle pour chaque canal considéré n'atteint pas la bande passante garantie pour chaque canal considéré et tant qu'il reste des paquets disponibles.

2. Procédé selon la revendication 1, dans lequel, dans chaque cycle, on n'aiguille vers les files d'attente des canaux (341-344) qu'une série ininterrompue de paquets.

3. Procédé selon l'une des revendications 1 et 2, dans lequel on aiguille d'abord vers la file d'attente d'au moins un des canaux (341, 343) un nombre ou volume minimal de paquets.

4. Procédé selon la revendication 3, dans lequel on ne poursuit l'aiguillage de paquets vers la file d'attente du canal (341, 343) ayant reçu le nombre ou volume minimal de paquets qu'après avoir aiguillé vers chacune des files d'attente des autres canaux (342, 344) un nombre ou volume de paquets atteignant le nombre ou volume minimal de paquets.

5. Procédé selon l'une des revendications 1 à 4, dans lequel on aiguille les paquets d'abord vers des files d'attente des canaux (341-344) prioritaires.

6. Procédé selon l'une des revendications 1 à 5, dans lequel on attribue aux paquets à aiguiller un niveau d'urgence et on aiguille d'abord les paquets présentant le plus haut niveau d'urgence.

7. Procédé selon l'une des revendications 5 et 6, dans lequel, en cas d'égalité de niveau de priorité de canaux (341-344), on aiguille d'abord les paquets présentant le plus haut niveau d'urgence.

8. Procédé selon l'une des revendications 1 à 7, dans lequel on fixe un seuil haut de nombre ou volume de paquets diffusés par cycle pour au moins l'un des canaux (341-344) et on arrête l'aiguillage de paquets vers la files d'attente de ce canal (341-344) lorsque le nombre ou volume de paquets aiguillés vers celle-ci correspond au moins audit seuil haut.

**Patentansprüche**

1. Verfahren zur Verteilung von numerischen Datenpaketen über eine Einheit aus unterschiedlichen Kanälen (341-344) mit ihren Warteschlangen von einem Sender zur Verteilung, wobei der Eingang des Senders (1-4) zumindest einen Informationsstrom empfängt, der in Form von Datagrammen oder Datenpaketen eingeht, wobei das Verfahren **dadurch gekennzeichnet ist, dass** die Verteilung gemäß einer Folge von periodischen Zyklen abläuft, wobei in jedem von ihnen die Datenpakete zu den Warteschlangen von vorgegebenen Kanälen (341-344) geleitet werden, so dass es Pakete gibt, bis die Anzahl oder das Volumen der geleiteten Pakete einem oberen Schwellwert der Anzahl oder des Volumens der pro Zyklus von dem Sender verteilten Datenpakete entspricht, und **gekennzeichnet durch**:

- Aufteilen der Kanäle (341-344) in Gruppen aus Kanälen,
- für jede Gruppe Festlegen eines oberen Schwellwerts der Anzahl oder des Volumens der Pakete, die pro Zyklus zu der Gruppe als Funktion des oberen Schwellwerts der Anzahl oder des Volumens der Pakete, die pro Zyklus von dem Sender (5) verteilt werden, und eines jeden oberen Schwellwerts der Anzahl oder des Volumens der Pakete, die pro Zyklus zu den anderen Gruppen verteilt werden, und
- Ausführen der Leitung der Pakete zu den Warteschlangen der Kanäle von jeder der betrachteten Gruppen, jedes Mal wenn der Sender (5) einen oberen Schwellwert der Anzahl oder des Volumens der pro Zyklus verteilten Pakete hat, der auf einen Wert von demjenigen der betrachteten Gruppe verringert ist, und in dem das Leiten ausgeführt wird **durch**:
- Identifizieren der Kanäle von jeder Gruppe, für die zumindest eine minimale Anzahl oder ein minimales Volumen der Pakete (TP), die pro Zyklus verteilet werden, d.h. ein garantiertes Durchlassband, sichergestellt werden muss, und zuerst Übertragen der Pakete zu den Warteschlangen dieser Kanäle, indem bei jeder Übertragung für jede Warteschlange dieser Kanäle die Kumulierung der Anzahl oder des Volumens der Pakete in der Warteschlange seit dem Beginn des laufenden Zyklus berechnet wird, Bestimmen eines voraussichtlichen Durchlassbands für jeden dieser Kanäle für die Periode des laufenden Zyklus ausgehend von der Kumulierung und der Dauer der Periode eines Zyklus und Durchführen der Übertragung der Pakete zu jedem der Kanäle, so lange das voraussichtliche Durchlassband für jeden betrachteten Kanal nicht das garantierte Durchlassband für jeden betrachteten Kanal erreicht, und solange Pakete verfügbar bleiben.

2. Verfahren nach Anspruch 1, in dem in jedem Zyklus nur ununterbrochene Folgen zu den Warteschlangen der Kanäle (341-344) geleitet werden

**3.** Verfahren nach einem der Ansprüche 1 und 2, wobei zuerst eine minimale Anzahl oder minimales Volumen zu der Warteschlange von zumindest einem der Kanäle (341,343) geleitet wird.

**4.** Verfahren nach Anspruch 3, wobei das Leiten der Pakete zu der Warteschlange des Kanals (341,343), der die minimale Anzahl oder das minimale Volumen der Pakete empfangen hat, erst nach dem Leiten einer Anzahl oder eines Volumens der Pakete, welches die minimale Anzahl oder das minimale Volumen der Pakete erreicht, zu jeder Warteschlange der Kanäle (342, 344) durchgeführt wird.

**5.** Verfahren nach einem der Ansprüche 1 bis 4, wobei die Datenpakete zuerst zu den Warteschlangen der prioritären Kanäle (341-344) geleitet werden.

**6.** Verfahren nach einem der Ansprüche 1 bis 5, wobei den zu leitenden Paketen ein Dringlichkeitsniveau zugeordnet wird, und wobei zuerst die Pakete geleitet werden, die das höchste Dringlichkeitsniveau aufweisen.

**7.** Verfahren nach einem der Ansprüche 5 und 6, wobei im Fall der Gleichheit des Prioritätsniveaus der Kanäle (341-344) zuerst die Pakete geleitet werden, die das höchste Dringlichkeitsniveau aufweisen.

**8.** Verfahren nach einem der Ansprüche 1 bis 7, wobei ein oberer Schwellwert der Anzahl oder des Volumens der pro Zyklus verteilten Pakete für zumindest einen der Kanäle (341-344) festgelegt wird, und wobei das Leiten der Pakete zu den Warteschlangen dieses Kanals (341-344) beendet wird, sobald die Anzahl oder das Volumen der zu diesen geleiteten Pakete zumindest dem oberen Schwellwert entspricht.

**Claims**

**1.** Method for broadcasting digital data packets through a set of various channels (341-344), together with their queues, from a broadcasting transmitter, the input of the transmitter receiving (1-4) at least one flow of information entering in the form of datagrams or data packets, said method being **characterised in that** the broadcasting is carried out according to a sequence of periodic cycles, in each of which the data packets are routed towards the queues of defined channels (341-344) as long as there are packets, until the number or volume of the routed packets corresponds to a high threshold of the number or volume of packets broadcast per cycle of the transmitter, and **characterised in that**:

- the channels (341-344) are divided up into groups of channels,
- for each group, a high threshold value of the number or volume of packets broadcast per cycle towards said group is fixed according to the high threshold of the number or volume of packets broadcast per cycle of the transmitter (5) and according to each high threshold value of the number or volume of packets broadcast per cycle towards the other groups, and
- the packets are routed towards the queues of the channels of each of the groups whilst taking into consideration, each time, the fact that the transmitter (5) has a high threshold of the number or volume of packets broadcast per cycle reduced to the value of that of the group in question, and the routing being carried out by the fact that:
- the channels of each group for which it is necessary to ensure at least a minimum number or volume of packets (TP) broadcast per cycle, that is to say a guaranteed bandwidth, are identified, and packets are transferred to the queues of said channels first, whilst calculating for each transfer the total for each queue of said channels of the number or volume of packets in said queue from the start of the current cycle, a predicted bandwidth is determined for each of said channels for the period of the current cycle from said total and from the duration of the period of a cycle, and the transfer of packets towards each of said channels is carried out as long as the predicted bandwidth for each channel in question does not reach the guaranteed bandwidth for each channel in question and as long as there are still packets available.

**2.** Method according to claim 1, wherein, in each cycle, only one continuous series of packets is routed towards the queues of the channels (341-344).

**3.** Method according to either claim 1 or claim 2, wherein a minimum number or volume of packets is routed first towards the queue of at least one of the channels (341, 343).

**4.** Method according to claim 3, wherein packets are routed towards the queue of the channel (341, 343) which has received the minimum number or volume of packets only after a number or volume of packets reaching the minimum number or volume of packets has been routed towards each of the queues of the other channels (342, 344).

**5.** Method according to any of claims 1 to 4, wherein the packets are routed first towards queues of the channels (341-344) which have priority.

**6.** Method according to any of claims 1 to 5, wherein a level of urgency is attributed to the packets to be routed, and the packets which have the highest level of urgency are routed first.

7. Method according to either claim 5 or claim 6, wherein, when channels (341-344) have equal levels of priority, the packets which have the highest level of urgency are routed first.

8. Method according to any of claims 1 to 7, wherein a high threshold of the number or volume of packets broadcast per cycle is fixed for at least one of the channels (341-344), and the routing of packets towards the queue of said channel (341-344) is stopped when the number or volume of packets routed towards said queue corresponds at least to said high threshold.

EP 1 039 761 B1

FIGURE 1

11

FIGURE 2

1 →

t

FIGURE 3A

PID →

t

FIGURE 3B

2 →

t

FIGURE 3C

EP 1 039 761 B1

FIGURE 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2316838 A